# EUROPÄISCHE PATENTANMELDUNG

(11) **EP 0 945 571 A1**
(43) Veröffentlichungstag der Anmeldung: **29.09.1999**
(21) Anmeldenummer: 99104962.8
(22) Anmeldetag: 12.03.1999
(51) Int. Cl.: E05B 47/06, F16P 3/08

(54) **Verriegelungsvorrichtung**

(30) Priorität: 27.03.1998 DE 19813626
(71) Anmelder: LTD Locking Technologies and Devices GmbH, 42551 Velbert (DE)
(72) Erfinder: Brückner, Rolf, 42549 Velbert (DE)
(74) Vertreter: Schieferdecker, Lutz, Dipl.-Ing.

(57) **Zusammenfassung**

Die Verriegelungsvorrichtung (1) weist einen Verriegelungsteil (2) und einen Schließteil (3) auf, die in betriebsmäßiger Zuordnung an einem Maschinengehäuse (5) bzw. an einem zu verriegelnden und zu sichernden Abdeckteil (7) befestigt werden, das aus Schutzgründen eine Gehäuseöffnung während des Maschinenbetriebs verschließt. Der Verriegelungsteil (2) weist ein ausschwenkbares Vorreiberelement (22) auf, das beim Ausschwenken über eine geneigte Schließfläche (38) am Schließteil (3) bis in die Verriegelungsstellung gleitet, worauf die Verriegelungsstellung des Vorreiberelements (22) aus Sicherheitsgründen blockiert wird. Auf Dauermagneten (40;43) ansprechende Sensoren (41,42) stellen die geschlossene Betriebsstellung des Abdeckteils (7) sowie die Schwenksperrung des Vorreiberelements (22) fest und erfüllen damit eine Voraussetzung für den Maschinenantrieb. Ein Entsperren und Entriegeln und damit Abheben des Abdeckteils (7) ist erst nach der Unterbrechung des Maschinenantriebs wieder möglich.

## Beschreibung

Die Erfindung bezieht sich auf eine Verriegelungsvorrichtung für ein klappen- oder haubenförmiges Abdeckteil einer elektrisch angetriebenen Maschine mit einem betätigbaren Verriegelungsteil und einem in Verriegelungsstellung mit diesem zusammenwirkenden Schließteil, die am Maschinengehäuse bzw. am Abdeckteil befestigt sind, wobei das in der Verriegelungsstellung befindliche Verriegelungsteil mittels eines Sperrteils blockierbar ist und Sensoren zum Feststellen der Schließstellung des Abdeckteils und seiner Verriegelung vorgesehen sind, die der Maschinensteuerung derart zugeordnet sind, daß die Maschine nur bei geschlossenem und verriegeltem Abdeckteil angetrieben werden kann.

Eine derartige Sicherheitsverriegelung ist bekannt. Sie wird von den Arbeitssicherheits-Institutionen als "Zuhaltung" bezeichnet. Es soll verhindert werden, daß die Bedienungsperson der Maschine Verletzungen dadurch erleidet, daß sie die Schutzabdeckung entfernt und in sich während des Maschinenbetriebs bewegende Elemente greift.

Im allgemeinen sind die bekannten Verriegelungen auf einer Seite als elektromagnetische und mechanische Sperre ausgebildet, in die auf der anderen Seite ein oftmals speziell konturierter Schließkloben eingreift. Das Sperrwerk besteht u.a. aus mehreren Elementen, die in die Schließklobenaufnahme hineinragen. Sie hinterfahren beim Eintauchen des Schließklobens dessen Sperrflächen und lösen im Inneren der Verriegelung elektrische Schaltzustände aus, die der Maschinensteuerung anzeigen, ob die Verriegelung offen oder geschlossen ist.

Mit dieser bekannten Ausbildung können insbesondere bei Betrieben mit hohem Staub- und Schmutzpartikelanfall schon nach kurzer Laufzeit Fremdkörper in die Schließklobenaufnahme eindringen, was zur Blockade der Sperrelemente führt. Da ein Nichtfunktionieren der Verriegelung gleichzeitig den Maschinenbetrieb verhindert, kommt es häufig zu einem hohen Reparaturaufwand und zu einem entsprechenden Produktionsausfall.

Dementsprechend liegt der Erfindung die Aufgabe zugrunde, eine Sicherheits-Verriegelung der eingangs beschriebenen Bauart zu schaffen, die unter Wahrung aller Sicherheitsaspekte auch unter kritischen Umgebungsbedingungen störungsunanfällig und zuverlässig arbeitet.

Diese Aufgabe wird erfindungsgemäß dadurch gelöst, daß das Verriegelungsteil ein in die Verriegelungsstellung ausschwenkbares Vorreiberelement aufweist, das beim Ausschwenken über eine am Schließteil vorgesehene Schließfläche gleitet und diese über- oder hintergreift, und daß die Schwenkachse des Vorreiberelements oder ein mit ihr drehfest verbundenes Sperrstück einen Umfangseinschnitt aufweist, in den das Sperrteil eingreift, das entgegen der Vorspannung einer Feder mittels eines Elektromagneten betätigbar und zwischen der sperrstellung und der Lösestellung verlagerbar ist.

Zweckmäßige Ausgestaltungen und Weiterbildungen dieser erfindungsgemäßen Verriegelungsvorrichtung ergeben sich aus den Unteransprüchen.

Mit der erfindungsgemäßen Vorrichtung wird die Verriegelung über die gegen Schmutz abgedichtete Schwenkachse in Verbindung mit dem Vorreiberelement erbracht, das beim Verriegeln die Schließfläche am Schließteil überfährt, wobei Schmutzpartikel abgestreift werden, die sich ggf. dort abgesetzt haben. In Verbindung mit der vorteilhafterweise schräg angeordneten Schließfläche läßt sich das Abdeckteil gleichzeitig mit dem Verriegeln auch gegen das Maschinengehäuse anziehen, was die Dichtigkeit zwischen dem Maschinengehäuse und dem Abdeckteil fördert. Selbst ein rauher und schmutzanfälliger Betrieb führt daher nicht mehr zu Störungen mit entsprechenden Produktionsausfällen und Reparaturkosten.

Ein Ausführungsbeispiel der Erfindung wird nachfolgend anhand einer schematischen Zeichnung näher erläutert. Darin zeigen:

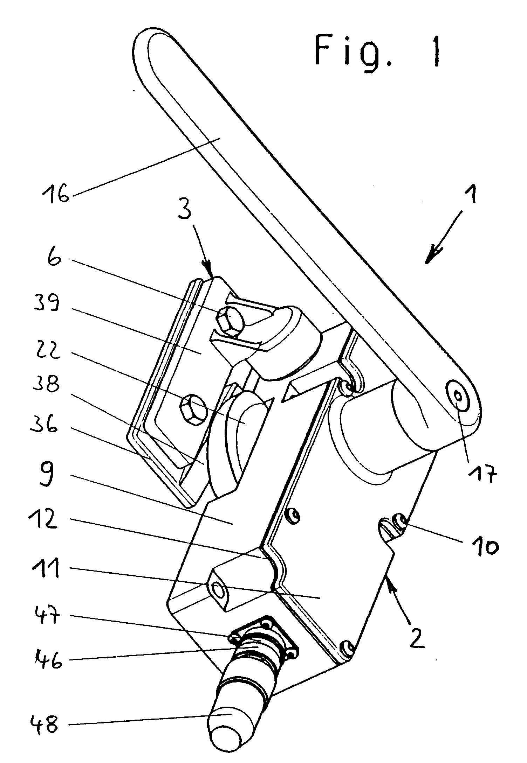

- Figur 1: eine isometrische Darstellung der kompletten zweiteiligen Verriegelungsvorrichtung in Verriegelungsstellung (ohne Maschinengehäuse und Abdeckteil);
- Figur 2: die komplette Verriegelungsvorrichtung in entriegelter Stellung mit geschnitten dargestellten Teilen des Maschinengehäuses und des Abdeckteils;
- Figur 3: einen Längsschnitt durch den unverriegelten Verriegelungsteil; und
- Figur 4: die Verriegelungsvorrichtung im unverriegelten Zustand in einer Draufsicht bei vom Verriegelungsteil abgenommenem Gehäusedeckel und Handgriff.

Die zweiteilige Verriegelungsvorrichtung 1 weist einen Verriegelungsteil 2 und einen Schließteil 3 auf. Der Verriegelungsteil 2 ist mittels Schrauben 4 am Maschinengehäuse 5 befestigt, während der Schließteil 3 in entsprechender Ausrichtung mittels Schrauben 6 an einem Abdeckteil 7 befestigt ist. Zwischen dem Maschinengehäuse 5 und dem Abdeckteil 7 ist eine Dichtung 8 mit Hohlprofil vorgesehen.

Der Verriegelungsteil 2 weist ein Verriegelungsgehäuse 9 auf, an dem mittels Schrauben 10 ein Deckel 11 mit zwischenliegender Deckeldichtung 12 befestigt ist. An den Deckel 11 ist ein zylindrischer Aufsatz 13 angeformt ist, der eine Lagerbuchse 14 aufnimmt, in der eine sich quer durch das Verriegelungsgehäuse 9 erstreckende Schwenkachse 15 gelagert ist. Auf das aus dem Aufsatz 13 vorragende, mit Schlüsselflächen versehene Ende der Schwenkachse 15 ist ein radialer Handgriff 16 aufgesteckt, der zum Drehen der Schwenkachse 15 dient und mit dieser durch eine Senkschraube 17 fest verbunden ist. Am äußeren Ende des Aufsatzes 13 ist die Schwenkachse 15 durch einen Dichtring 18 abgedichtet.

An der dem Aufsatz 13 gegenüberliegenden Seite weist das Verriegelungsgehäuse 9 eine nach außen offene Einziehung 19 auf, die das vorragende Ende der Schwenkachse 15 aufnimmt, die in der die Einziehung 19 begrenzenden Verriegelungsgehäusewand mittels eines Gehäusedichtrings 20 abgedichtet ist. Auf dem vorragenden Ende der Schwenkachse 15 ist mittels eines Querstifts 21 ein Vorreiberelement 22 befestigt, das von der Einziehung 19 aufgenommen ist und durch Drehen der Schwenkachse 15 mit seinem radial vorragenden Ende aus der Einziehung 19 heraus in die Verriegelungsstellung verschwenkbar ist.

Im Inneren des Verriegelungsgehäuses 9 ist auf der Schwenkachse 15 ein ringförmiges Sperrstück 23 angeordnet, das mittels einer Scheibenfeder 24 drehfest mit der Schwenkachse 15 verbunden ist. Das Sperrstück 23 ist auf gegenüberliegenden Seiten von einer Unterlegscheibe 25 und einer Paßscheibe 26 flankiert. Das Sperrstück 23 weist an seinem Außenumfang einen Umfangseinschnitt (nicht dargestellt) auf, in den ein bolzenförmiges Sperrteil 27 unter der Einwirkung einer Feder 28 eindringen kann, um die Schwenkachse 15 in ihrer Verriegelungsstellung zu blockieren.

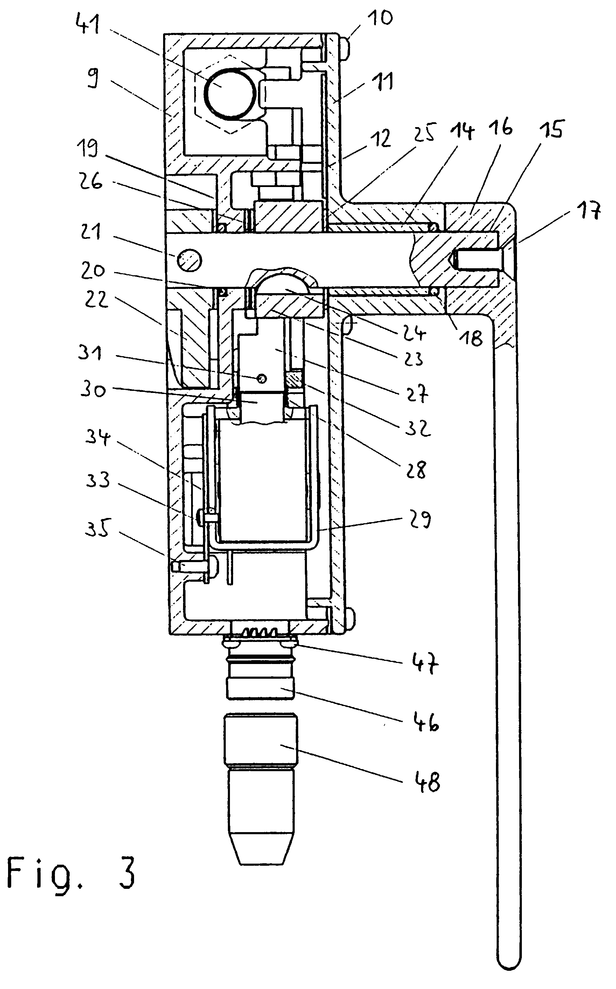

Zum Zurückziehen des Sperrteils 27 aus seiner Sperrstellung dient gemäß Figur 3 ein im Verriegelungsgehäuse 9 untergebrachter und radial zur Schwenkachse 15 ausgerichteter Elektromagnet 29, dessen Anker 30 über einen Spiralspannstift 31 mit dem Sperrteil 27 sowie mit einem Gleitstück 32 verbunden ist. Der Elektromagnet 29 ist mittels Schrauben 33 an einer Grundplatte 34 befestigt, die ihrerseits mittels Schrauben 35 am Verriegelungsgehäuse 9 befestigt ist.

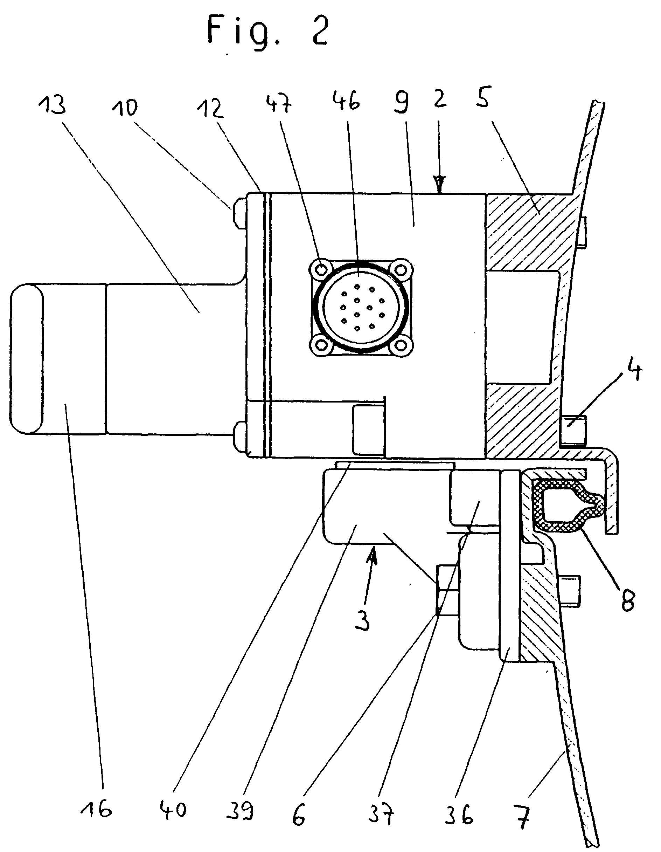

Der am Abdeckteil 7 befestigte Schließteil 3 weist eine Trägerplatte 36 mit einem aufragenden Schließsteg 37 (Figur 2) mit einer der Trägerplatte 36 abgewandten, leicht geneigten Schließfläche 38 auf, über die das Vorreiberelement 22 beim Ausschwenken in die Verriegelungsstellung hinweggleitet, so daß in der Verriegelungsstellung das Schließteil 3 niedergehalten wird und damit das Abdeckteil 7 verriegelt ist.

Zum Schließteil 3 gehört auch ein auf der Trägerplatte 36 aufliegendes Trägergehäuse 39 für einen Dauermagneten 40, der einem die Schließ- oder Betriebsstellung des Abdeckteils 7 feststellenden Magnetsensor 41 innerhalb des Verriegelungsgehäuses 9 zugeordnet ist.

Innerhalb des Verriegelungsgehäuses 9 ist auch ein Magnetsensor 42 zum Feststellen der blockierten Verriegelungsstellung der Schwenkachse 15 mit dem Vorreiberelement 22 angeordnet. Dieser Magnetsensor 42 spricht auf einen Dauermagneten 43 an, der am gegenüberliegenden Ende eines Winkelhebels 44 befestigt ist, der vom Gleitstück 32 vorspringt und sich daher zusammen mit dem bolzenförmigen Sperrteil 27 bewegt.

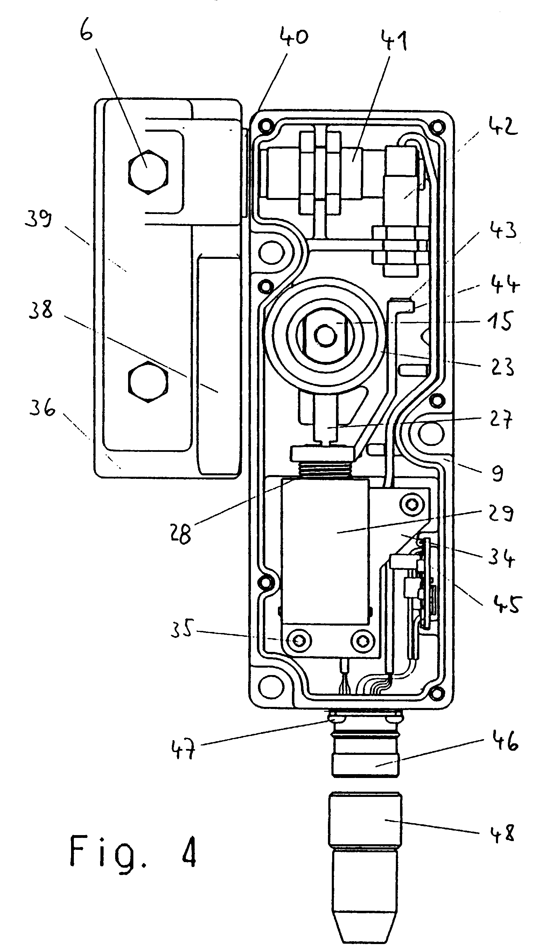

Innerhalb des Verriegelungsgehäuses 9 ist auch eine Elektronik 45 mit Spannungsbegrenzer und Gleichrichter untergebracht, die wie in Figur 4 dargestellt ebenso wie der Elektromagnet 29 und die Sensoren 41 und 42 elektrisch mit einem Steckergehäuse 46 verbunden ist, das mittels Schrauben 47 außen an der Stirnseite des Verriegelungsgehäuses 9 befestigt ist. Dem Steckergehäuse 46 ist ein Rundstecker 48 zugeordnet, über den die elektrische Verbindung mit der Maschinensteuerung (nicht dargestellt) erfolgt.

Zum Verriegeln des an das Maschinengehäuse 5 angelegten Abdeckteils 7 wird der Handgriff 16 verschwenkt und dadurch die Schwenkachse 15 gedreht, wobei das Vorreiberelement 22 aus der Einziehung 19 ausgeschwenkt wird, über die Schließfläche 38 des Schließteils 3 gleitet und dessen Schließsteg 37 übergreift. Bei diesem Drehen der Schwenkachse 15 gleitet der Sperrteil 27 über den Außenumfang des sich mitdrehenden ringförmigen Sperrstücks 23, bis dessen Umfangseinschnitt auf den Sperrteil 27 ausgerichtet ist und dieser unter der Vorspannwirkung der Feder 28 in den Umfangseinschnitt eindringt und dadurch die Schwenkachse 15 blockiert und die Verriegelungsstellung sichert. Dabei nähert sich der Dauermagnet 43 dem Magnetsensor 42, der ein entsprechendes Verriegelungssignal an die Maschinensteuerung liefert. Ein entsprechendes Schließsignal vom Magnetsensor 41 liegt schon vor, seitdem das Abdeckteil 7 in die in Figur 2 gezeigte Schließstellung in Anlage am Maschinengehäuse gebracht wurde und daher der codierte Dauermagnet 40 dem Magnetsensor 41 gegenüber liegt. Die beiden Sensoren 41 und 42 erfüllen damit die Bedingung für den elektrischen Start der Maschine.

Ein Öffnen des Abdeckteils 7 kann erst dann wieder erfolgen, wenn der Maschinenantrieb abgeschaltet wurde und die Maschine stillgesetzt ist. Nur unter dieser Voraussetzung wird der Elektromagnet 29 erregt und der Anker 30 angezogen, so daß der Sperrteil 27 zurückgezogen wird und eine Rückdrehung der Schwenkachse 15 mittels des Handgriffs 16 möglich wird, wobei das Vorreiberelement 22 in die Einziehung 19 zurückgeschwenkt wird, so daß die Verriegelung zwischen dem Schließteil 3 und dem Verriegelungsteil 2 aufgehoben ist.

## Patentansprüche

1. Verriegelungsvorrichtung für ein klappen- oder haubenförmiges Abdeckteil (7) einer elektrisch angetriebenen Maschine mit einem betätigbaren Verriegelungsteil (2) und einem in Verriegelungsstellung mit diesem zusammenwirkenden Schließteil (3), die am Maschinengehäuse (5) bzw. am Abdeckteil (7) befestigt sind, wobei das in der Verriegelungsstellung befindliche Verriegelungsteil (2) mittels eines Sperrteils (27) blockierbar ist und Sensoren (41, 42) zum Feststellen der Schließstellung des Abdeckteils (7) und seiner Verriegelung vorgesehen sind, die der Maschinensteuerung derart zugeordnet sind, daß die Maschine nur bei geschlossenem und verriegeltem Abdeckteil (7) angetrieben werden kann, **dadurch gekennzeichnet,** daß der Verriegelungsteil (2) ein in die Verriegelungsstellung ausschwenkbares Vorreiberelement (22) aufweist, das beim Ausschwenken über eine am Schließteil (3) vorgesehene Schließfläche (38) gleitet und diese über- oder hintergreift, und daß die schwenkachse (15) des Vorreiberelements (22) oder ein mit ihr drehfest verbundenes Sperrstück (23) einen Umfangseinschnitt aufweist, in den das Sperrteil (27) eingreift, das entgegen der Vorspannung einer Feder (28) mittels eines Elektromagneten (29) betätigbar und zwischen der Sperrstellung und der Lösestellung verlagerbar ist.

2. Verriegelungsvorrichtung nach Anspruch 1, **dadurch gekennzeichnet,** daß die Schließfläche (38) am Schließteil (3) gegenüber der Schwenkebene des Vorreiberelements (22) derart geneigt verläuft, daß das Abdeckteil (7) mit fortschreitender Schließschwenkung des Vorreiberelements (22) gegen das Maschinengehäuse (5) angezogen wird.

3. Verriegelungsvorrichtung nach Anspruch 1 oder 2, **dadurch gekennzeichnet,** daß das Sperrteil (27) mittels der Feder (28) radial zur Schwenkachse (15) in die Blockierstellung vorgespannt und mittels des Elektromagneten (29) entgegen der Vorspannung in seine Lösestellung verlagerbar ist.

4. Verriegelungsvorrichtung nach einem der Ansprüche 1 bis 3, **dadurch gekennzeichnet,** daß die Schwenkachse (15) in einer Lagerbuchse (14) innerhalb des Verriegelungsgehäuses (9) gelagert ist.

5. Verriegelungsvorrichtung nach einem der Ansprüche 1 bis 4, **dadurch gekennzeichnet,** daß die Schwenkachse (15) an ihrem einen Ende das Vorreiberelement (22) trägt und mit ihrem anderen Ende aus dem Verriegelungsgehäuse (9) herausgeführt und mit einem radialen Handgriff (16) verbunden ist.

6. Verriegelungsvorrichtung nach einem der Ansprüche 1 bis 5, **dadurch gekennzeichnet,** daß das Vorreiberelement (22) in eingeschwenkter Entriegelungsstellung in einer Einziehung (19) des Verriegelungsgehäuses (9) aufgenommen ist.

7. Verriegelungsvorrichtung nach einem der Ansprüche 1 bis 6, **dadurch gekennzeichnet,** daß die Schwenkachse (15) im Bereich der bzw. jeder Durchführung durch die Wand des Verriegelungsgehäuses (9) mit einem Gehäusedichtring (18, 20) zusammenwirkt.

8. Verriegelungsvorrichtung nach einem der Ansprüche 1 bis 7, **dadurch gekennzeichnet,** daß der die geschlossene Betriebsstellung des Abdeckteils (7) feststellende Magnetsensor (41) im mit dem Maschinengehäuse (5) verbundenen Verriegelungsgehäuse (9) angeordnet ist und auf einen codierten Dauermagneten (40) anspricht, der am mit dem Abdeckteil (7) verbundenen Schließteil (3) befestigt ist.

9. Verriegelungsvorrichtung nach einem der Ansprüche 1 bis 8, **dadurch gekennzeichnet,** daß der die Verriegelung feststellende Magnetsensor (42) im Verriegelungsgehäuse (9) angeordnet ist und auf einen Dauermagneten (43) anspricht, der sich mit dem Anker (30) des Elektromagneten (29) verlagert.
